# EUROPEAN PATENT SPECIFICATION

(11) **EP 4 145 989 B1**
(45) Date of publication and mention of the grant of the patent: **19.02.2025**
(21) Application number: 21728327.4
(22) Date of filing: 04.05.2021
(51) Int. Cl.: A01K 61/60, A01K 63/04

(54) **OUTLET SYSTEM FOR AN AQUACULTURE CAGE**
AUSLASSSYSTEM FÜR EINEN AQUAKULTURKÄFIG
SYSTÈME DE SORTIE POUR UNE CAGE D'AQUACULTURE

(30) Priority: 04.05.2020 NO 20200519
(43) Date of publication of application: 15.03.2023
(73) Proprietor: Fiizk Technology AS, 7041 Trondheim (NO)
(72) Inventor: BERGAN, Håkon Frank, 4639 Kristiansand (NO)
(74) Representative: Acapo AS
(86) International application number: PCT/NO2021/050111
(87) International publication number: WO 2021/225450

(56) References cited:
- WO-A1-2010/144990
- GB-A- 2 242 140
- NO-A1- 20 171 340
- US-A- 5 636 595
- US-B1- 6 187 208

## Description

### Field of the invention

The present invention relates to an outlet basin for a closed or semi-closed aquaculture pen. The outlet basin serves as a water outlet and for separate removal of sludge and fish. The present invention also relates to an aquaculture pen comprising such an outlet basin and to a use of the outlet basin.

### Background of the invention

Aquaculture production of salmon in Norway is currently to a large extent performed in large open-net pens deployed close to the shore, or sometimes in more exposed areas offshore.

There are several problems related to this open form of intensive production where there is free water exchange with the surroundings through the net. One of them is the risk of fish escaping when nets are damaged, especially in more exposed locations or during operations. Another problem is related to the free discharge of waste from the farms. Another problem is that the free water exchange through the nets increases the risk that infectious diseases will be transported into the net pen. These can be different types of parasites, viral and bacterial infections or also amoeba infections. In particular, parasitic infections by salmon lice have lately been considered as one of the most serious problems faced by the aquaculture industry in Norway. The infectious stages of salmon lice are typically concentrated in the upper 5-10 metres from the water surface, and are transported with the water current into the net pens where they infect the fish.

Another problem can be poisonous microalgae accumulating under certain environmental conditions close to the water surface as so-called "harmful algal blooms " (HABs). When transported into the cages, these can lead to mass death of fish.

To prevent this, increasing efforts have been made to develop closed cage systems, often referred to as closed containment aquaculture (CCA). Apart from land-based systems, also including recirculation aquaculture systems (RAS) where water is recirculated within a closed system, there are also semi-closed systems deployed in the sea where water is no longer exchanged passively in and out through the net pen. Instead, water is pumped into the cage, i. e. into enclosed containers holding the fish, in order to supply the fish with fresh water and oxygen. These cages are typically made from water impermeable materials which prevent direct water exchange with the surrounding water, e.g. tarpaulin, plastic, concrete or the like. If the water is not recirculated, these cage systems are considered as semi-closed as they do not retain all waste and effluent water. The water supplied to the cages is often pumped up from a lower depth, where there is a low risk of contamination compared to the water close to the surface. Instead or additionally, the water maybe pre-treated, such as by filtration, before it is supplied to the cage.

One of the challenges with semi-closed or closed systems is to obtain a good water exchange in the whole enclosed cage volume. This is important for good growth and welfare of the fish when they are kept at high densities during intensive production. Therefore, both the placement and the design of the outlet system are main critical factors.

Another challenge with fish farms is the removal and handling of waste derived from the farm. Discharge from sea farms is recognized as a potential environmental threat and therefore it is desirable to have handling systems for collection of waste. In closed or semi-closed systems, organic waste has to be removed from the cage because accumulated waste will also affect the water quality and fish welfare. Particulate sunken waste is typically removed at the bottom of the closed cultivation unit together with the effluent water. This includes both large particulate waste such as dead fish ("morts") as well as small particulate waste, often referred to as sludge. The sludge typically comprises faeces, unconsumed, disintegrated or whole feed particles, organic waste from biofouling etc.

While in open fish farm sludge has previously simply been discharged together with the effluent water, environmental concerns have meant that the sludge now needs to be collected. Thus, there is a need for outlet systems which allow for the high water exchange rate needed when working with large enclosed cages, while at the same time providing an efficient collection system for sludge and morts.

WO2014/123427 discloses an outlet basin for a closed fish pen which is attachable to the bottom portion of the pen. The main water outlet is arranged centrally in the housing of the basin in the form of one main, central channel. Sludge and dead fish are collected in an annular space provided in the housing of the basin around said central main water outlet channel. Dead fish and sludge are separated by a suitable slanted grid in the annular space, allowing the sludge particles to pass through the grid, while dead fish are collected on the grid for periodical removal through a separate outlet.

US 6,187,208, WO2010/144990 and NO20171340 disclose different systems for separate removal of sludge, fish and water from a fish tank. In particular, US 6,187,208 provides a debris separating system for sediment removal from an aquatic tank. The debris separating system comprises a substantially circular collecting chamber having an outer wall forming a substantially conical shaped wall and an outlet pipe at the bottom. The outer wall of the collecting chamber integrates injectors to collect waste stream entering into a centrifugal separation chamber to separate the debris from the clean water.

Further, many of the known systems have limitations in terms of their water exchange capacity, or do not allow an optimal water exchange in the whole cage volume. Moreover, many of the known systems are not suitable for, or are ineffective in, separately collecting and handling small particulate waste such as sludge and dead fish. Farmed fish such as salmon, especially when cultivated in high densities as in intensive aquaculture, have a need for good water quality for their welfare and growth. To achieve this, there must be a high water exchange rate in the pens and waste must be removed. For reasons of water quality, sludge should preferably be removed and collected continuously or at regular and short intervals. This should be done in as little water volume as possible to save energy costs related to the separation of sludge and water. Dead fish must also be removed, and should be dealt with separately from the sludge. Pumping up dead fish is an energy consuming process and is therefore typically only done after longer intervals such as once per day. Thus, there is a need for systems and devices which are efficient and robust in performing these tasks, in particular for large closed or semi-closed fish pens deployed in the sea with a high amount of fish biomass in each pen.

Another problem is that many of the known systems do not allow for easy cleaning of surfaces. Another problem is that many of the known systems cannot be combined with cages made from a flexible material such as a tarpaulin bag. Bag systems are generally dependent on light weight outlet systems, which can be easily combined with the bags. Moreover, it is desirable that the system allows the cage to be lifted for maintenance or the cage volume to be reduced for emptying the cage or removal of fish.

### Objects of the present invention

Thus, an objective of the present invention is to provide an effective outlet system/outlet basin for a closed or semi-closed fish cage, which overcomes one or more of the problems discussed above. In particular, the present invention aims at providing an outlet system which allows a high rate of water exchange and at the same time allows sludge to be effectively and continuously collected and removed in a concentrated way and which allows for the separate removal of dead fish. Another aim is to provide a system which can be combined with flexible bag systems. Another aim is to provide a system which can be easily cleaned and maintained, and potentially lifted when the volume of the cage is to be reduced such as when fish are to be collected.

### Summary of the invention

The objects and advantages are achieved by a solution as defined in the independent claims. Preferred embodiments are also defined in the dependent claims.

According to a first aspect of the present invention, there is provided an outlet basin for an aquaculture pen comprising: a closable outlet duct for fish; a sludge removal system comprising a circumferential channel covered by a mesh for preventing fish from passing into the channel and having at least one sludge port for the removal of sludge; attachment means for coupling the outlet basin to the bottom portion of the pen along the outer edge of the channel. The outlet basin comprises a funnel with a wide upper opening and a narrow lower opening in fluid communication with the outlet duct for fish, and a main water outlet arranged in the funnel sidewall as one or more apertures covered by a fish grid to prevent fish from passing through.

A major advantage of this outlet basin is that it allows for very efficient water exchange in closed/semi-closed net pens. At the same time, it allows for the separate collection, removal and handling of sedimented sludge and dead fish. The sedimented sludge can be collected in a concentrated way without the need to remove a large amount of water. Furthermore, the sludge is collected along the outer diameter of the funnel independently and unaffected by the collection dead fish, which are collected in the center of the funnel. Thus, the sludge removal system, in particular the collection part where sludge passes through the sludge mesh, can have a comparably large surface area for collection and it can be dimensioned according to need i.e. by enlarging or reducing the diameter of the basin and sludge system. The dead fish can be removed periodically and as needed, while the sludge can be removed continuously without being affected by dead fish potentially blocking the sludge mesh. This has the great advantage that the water quality in the system can be maintained at a high level at all times. The claimed system has the further advantage that it is suitable for combination or use with flexible bag systems such as for fish pens. Due to its construction, and the possibility of having a high water exchange rate and efficient water exchange, it is possible to adapt the size of the outlet basin and combine it with large fish cages.

In a preferred embodiment the outlet basin comprises
- a two-part housing comprising the funnel as an upper part and a cylindrical lower part extending downwards in the area from the narrow opening of the funnel,
- a central region of the lower part comprises the outlet duct for fish leaving an elongated annular space between the outlet duct and the walls of the housing,
- a lower end of the outlet duct is connected via one or more through openings to at least one outlet hose leading to a receptacle for fish,
- wherein the elongated annular space is at its upper end in fluid connection via one or more sludge evacuation pipes with the sludge channel and comprises the sludge port at its lower end. This preferred embodiment has the advantage that the main water outlet, the removal system for dead fish and the sludge removal system are all fully integrated parts of the outlet basin, and the outlet basin has a compact unitary design, allowing easy deployment, removal and handling as one single unit. The sludge and the dead fish are transported inside the outlet basin to a lower part of the housing wherefrom they can be transported by hoses up to the water surface. No additional arrangements are needed on the outside of the outlet basin.

In another alternative embodiment, the upper opening of the funnel is elevated above the level of the circumferential channel and the attachment means. The advantage of this solution is that it provides the possibility of reducing the diameter of the outlet basin in cases where size, especially of the bottom of the pen where the outlet basin is attached, is limited in space.

The circumferential sludge channel can be connected to the elongated annular space by a plurality of radially extending sludge evacuation pipes, preferably curved pipes. This allows an effective and non-turbulent removal of the sludge from the sludge channel into the lower, central part of of the outlet basin for further removal.

The apertures of the main water outlet can be in the form of radial slits located between the sludge evacuation pipes. Thereby, the main water outlet can be very large and water removal is efficient compared to known solutions.

The outlet duct for fish can be provided with two through openings for separate evacuation of dead and living fish, and a valve system for closing and opening each of the openings. This has the advantage that when the cage is to be emptied, living fish can be removed through an uncontaminated, clean and separate system which has not previously been used for dead fish.

The effluent water flow through the main water outlet can be regulatable, preferably by closing means which can adjust the size of the aperture.

A guiding net for fish can extend circumferentially upwards from the wider opening of the funnel towards to the side walls of the net pen where it is attachable. This is an advantage where the funnel is elevated because the dead fish are guided into the funnel and do not accumulate on the lower parts of the outlet basin or the bottom of the bag of the fish pen.

The outlet basin can be lifted up by means for lifting or by regulatable floating elements providing positive buoyancy. This has the advantage that the outlet basin can be easily deployed and removed, and further that the volume of a bag made from a flexible material can be reduced when needed by lifting the outlet basin. The floating elements may also contribute to adjusting the buoyancy/weight of the outlet basin when deployed in the water.

In a further aspect, the present invention relates to an aquaculture pen including an outlet basin according to any of the preceding paragraphs.

In yet a further aspect the present invention relates to the use of an outlet basin according to any of the preceding paragraphs in a closed or semi-closed aquaculture pen. Preferably the outlet basins are for use in intensive aquaculture of pelagic fish, most preferably for use in an aquaculture pen for the farming of a species selected from salmonids, bass, bream, codfish, flatfish, tilapia, and groupers.

### Description of the diagrams

Embodiments of the present invention will now be described, by way of examples only, with reference to the following schematic diagrams wherein:
Figure 1 shows in a side view a first embodiment of an outlet basin according to the present invention mounted to a closed or semi closed fish pen.
Figure 2 shows in a perspective view the first embodiment of an outlet basin according to the present invention.
Figure 3 shows a top view of figure 2.
Figure 4 shows in a perspective view the first embodiment of figure 1 with the fish grid removed.
Figure 5 shows in a perspective view the first embodiment of figure 1 from the side.
Figure 6 shows a top view of the first embodiment without the fish grid, also indicating the position of section axis A-A and B-B.
Figure 7 shows a section view through axis A-A of figure 4.
Figure 8 shows an enlargement of one part of section view of figure 7 as marked in the dashed rectangle in figure 7.
Figure 9 shows a section view through axis B-B of figure 6.
Figure 10 shows in a side view a second embodiment of an outlet basin according to the present invention mounted to a closed fish pen.
Figure 11 shows in a perspective view the second embodiment of an outlet basin.
Figure 12 shows in a perspective view the second embodiment of an outlet basin without the sludge mesh.
Figure 13 shows in a side view the second embodiment of an outlet basin.
Figure 14 shows a top view of figure 12, also indicating the position of section axis A-A and B-B.
Figure 15 shows a section view along axis A-A of figure 14.
Figure 16 shows a section view along axis B-B of figure 14.
Figure 17 shows in a side view a closed fish pen with a mounted outlet basin according to the first embodiment when deployed inside an outer net pen.

### Description of preferred embodiments of the invention

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to various forms of outlet basin systems for a closed or semi-closed fish farm typically deployed in the sea. However, it should be appreciated that the outlet basin for water, sludge and dead fish, and other waste is also applicable and suitable for use with respect to any other type of aquaculture system requiring the handling of water and dead fish, or for other aquatic organisms to be cultivated apart from fish.

Reference throughout the specification to "one embodiment" or "an embodiment" means that a particular feature, structure, or characteristic described in connection with an embodiment is included in at least one embodiment of the subject matter disclosed. Thus, the phrases "in one embodiment" or "in an embodiment" in various places throughout the specification do not necessarily refer to the same embodiment.

In the description relative terms such as front, top, center, bottom, side, lower, upper, downward, upward, outward, sideward, vertical, and horizontal etc. are all related to the outlet basin when in upright position i.e. when mounted in a fish pen ready for use. Even though only exemplified for one side, it is to be understood that some features will correspondingly also apply for the opposite side of the device.

In the context of the present invention an aquaculture pen refers to a pen or cage, most commonly an aquaculture farm arranged in a body of water, typically a sea-based fish pen. The term also includes closed systems or semi-closed systems where the farmed organisms are kept in a more or less watertight container, effectively preventing a direct water exchange with the surrounding water and having an external water supply comprising one or more pumps. The system can be deployed in water e.g. in the sea or a lake or as part of a land-based aquaculture farm. It may also be part of a recirculation aquaculture system (RAS) both sea and land based.

By sunken farmed organisms/dead fish is meant aquatic organisms which are farmed or kept in the aquaculture cultivation unit and which are dead (commonly often called "morts"), almost dead, or at least sick and are not swimming but sinking down to the bottom of the cage and which it is desirable to remove from the cage.

The farmed organisms can typically be pelagic fish such as salmonids, codfish, bream, bass, groupers, flatfish, tilapia, and the like but it may also comprise other aquatic organisms which can be farmed such as crustaceans and/or mollusks.

Waste to be removed can be divided in large particulate waste such as dead fish or other organic waste for example from biofouling, and small particulate waste such as feed waste, feces, bio fouling organisms/particles, other organic waste such as marine snow and the like. In the context of the present invention, the small particulate waste will be referred to as sludge.

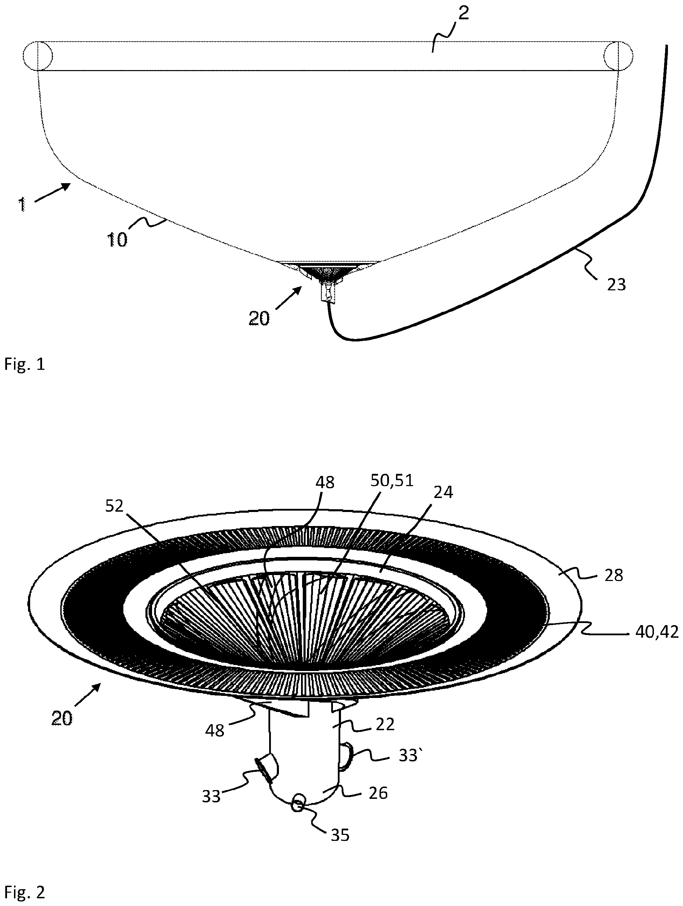

Figure 1 shows a schematic illustration of an aquaculture pen 1, in particular a fish pen, with an outlet basin 20 mounted to the bottom part of the pen 1. The pen 1 comprises a bag 10 deployed from a floating collar 2. The bag 10 is typically made of an impermeable (tight) material, in particular a light weight, watertight material such as tarpaulin or cloth. The bag 10 can be made of a flexible material. In the embodiment shown, the outlet basin is mounted to the bottom portion of the bag 10 in the center of the fish pen 1. The outlet basin 20 is provided with at least one outlet hose 23, typically extending from the outlet basin 20 to one or more receptables for waste/fish (not shown in the figure) at the water surface. For the purpose of collecting dead fish and sludge separately, the outlet basin is preferably provided with at least two hoses 23 and two different receptacles for waste, allowing differentiation between the different waste types, with one receptacle for dead fish and one for sludge. In a preferred embodiment, the outlet basin 20 is provided with additional outlet means and a hose for pumping up live fish such as when the pen 1 is to be emptied of fish and fish are to be pumped up into a fish barge or carrier.

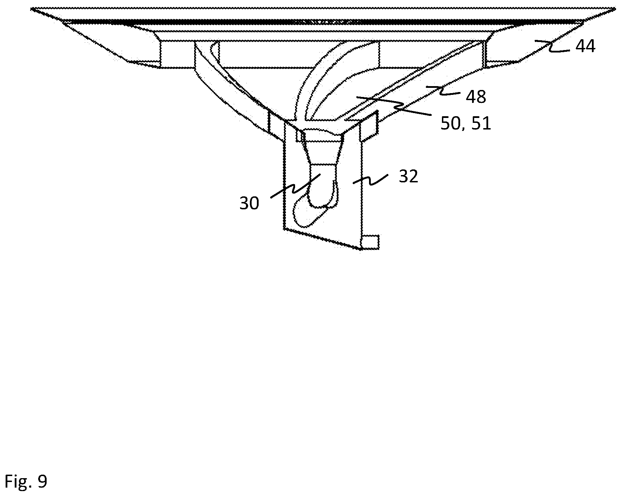

Figures 2 to 9 show details of the outlet basin 20 of the the first embodiment without the pen 1. The outlet basin 20 comprises a housing 22 with an upper peripheral conical portion/funnel 24 and a lower cylindrical portion 26, which is typically arranged in the center of the outlet basin 20.

The outlet basin 20 is attachable to the bottom portion or lower portion of the bag 10 of the pen 1 along a peripherical annular mounting collar 28 of the funnel 24 of the housing 22 (Fig. 1) by suitable means for attachment.

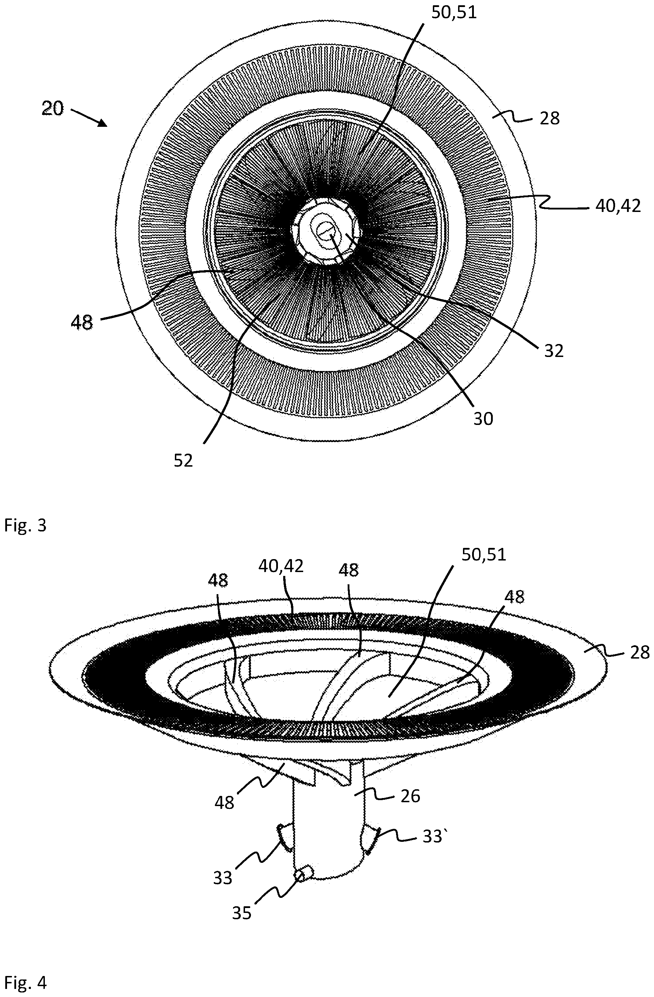

The lower cylindrical portion 26 is provided with a central fish outlet duct 30 which is, in the embodiment shown, connected to two closable through openings 33 and 33' for the removal of fish (Fig. 2 and 3). Having two different through openings 33 and 33 allows dead fish (morts) and living fish to be removed through separate hoses. This will be described in more detail below.

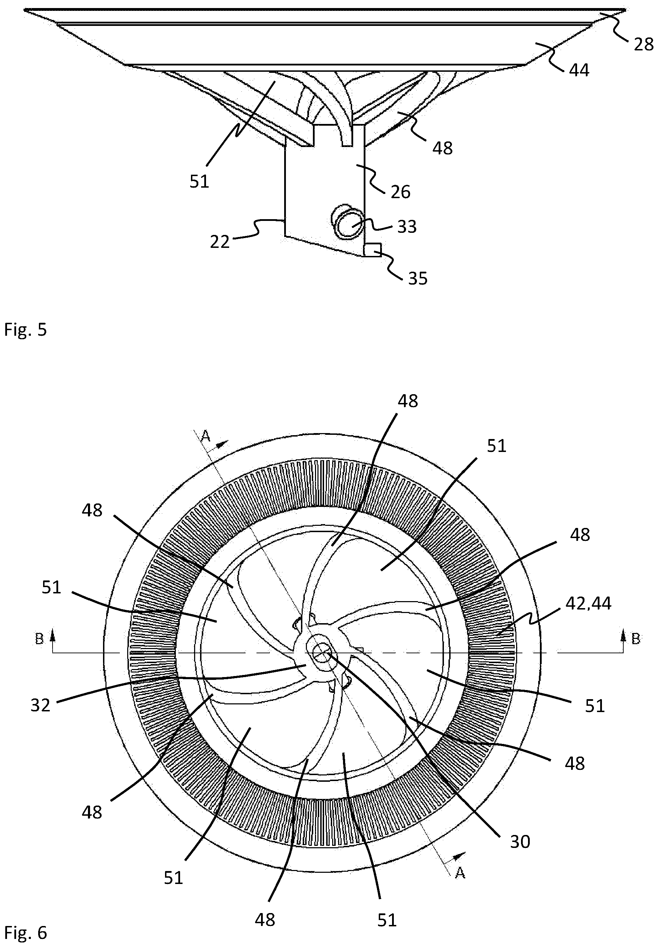

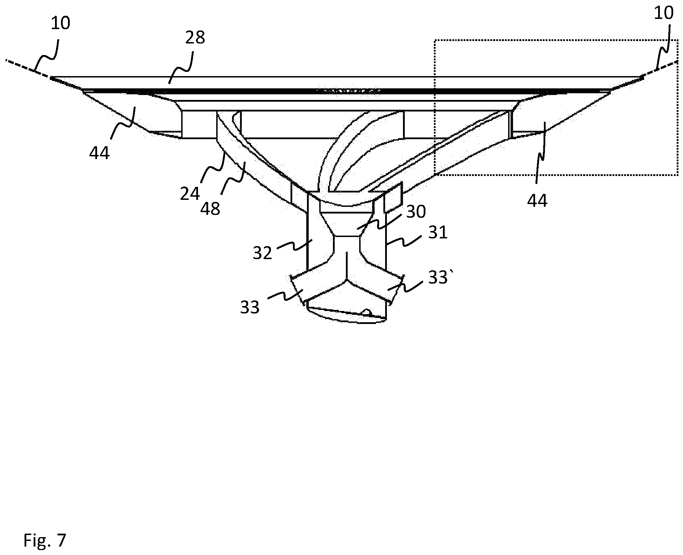

The fish outlet duct 30 inside the lower cylindrical portion 26 leaves an elongated annular space 32 between the outlet duct 30 and outer wall 31 of the cylindrical housing 22 (for details see e.g. Fig. 7). The annular space 32 is provided with at least one sludge port 35 in form of a further through opening (see e.g. figs. 4 and 5). Both the outlets for fish 33 and 33' and the sludge port 35 are typically each connected to separate hoses 23 for pumping up fish or sludge (not shown in the figures).

The funnel (cone-shaped upper portion) 24 of the housing 22 is arranged to have its wide opening up and its narrow opening down, wherein the narrow lower opening is connected to and in fluid connection with an upper end of the fish outlet duct 30 (Fig. 4, 5 and 7). The narrow lower opening of the funnel 24 connected to the outlet duct 30 is thereby dimensioned to allow for efficient removal of the farmed organisms such as dead or living fish.

The outlet basin 20 comprises a sludge removal system 40 which is separate from the main effluent water release system 50 and fish outlet system. This allows for the effective handling of the removal of sludge and fish as well as the water exchange out of the pen, though separate from each other.

The sludge removal system 40 comprises an outer circumferential sludge channel 44 arranged in the periphery of the funnel 24 of the housing 22 (see e.g. Figs. 5 and 7). The sludge channel 44 is covered by a sludge mesh (sieve) 42. The sludge mesh is dimensioned to allow sedimented small particulate waste to pass through the mesh 42 while the farmed organisms are retained in the pen 1 by said sludge mesh 42. The sludge mesh 42 is typically slanted towards the narrow opening of the funnel 24. The slanting surface allows sunken larger particulate waste such as dead fish, which do not pass through the sludge mesh 42, to be transported over the mesh 42 due to gravity and the main water current towards the center of the funnel 24 for eventual removal through the outlet duct 30.

The circumferential sludge channel 44 has at least one opening by which it is connected to the elongated annular space 32 in the cylindrical part 26 of the housing 22 for removal of sludge that has fallen through the sludge mesh 42. In the embodiment shown, the sludge channel 44 is connected to the annular space 32 via a plurality of radially arranged sludge evacuation pipes 48. In the embodiment shown, these pipes are advantageously formed as curved pipes to avoid a turbulent flow or clogging of waste inside the sludge channel 44. The sludge removal system 40 may be regulatable by a suitable valve system, for example arranged in connection with the sludge evacuation pipes, the channel 44 and/or the sludge port 35 in the cylindrical portion of the housing.

The one or more apertures 51 in the form of intermediate slits between the sludge evacuation pipes, i.e. in the area between the sludge connection channel 44 and the top part of the cylindrical portion 26 of the housing 22, are open and serve as a main water outlet 50 for the fish pen 1. To avoid farmed organisms being able to escape through the slits of this main water outlet 50, the slits of said main water outlet 50 are covered by one or more fish grids 52, which cover at least the area between the sludge pipes 48. The spacing in the fish grid 52 is chosen such that no fish/other farmed organism can escape through the main water outlet 50.

At a lower end of the outlet duct 30 there are arranged one or more through openings 33, which are typically connected to outlet hose(s) 23 for transport to the surface and subsequent further handling of the fish. In the embodiment shown, the outlet duct 30 ends at its lower end in two different openings 33 and 33'. This allows for separate and selective removal of dead fish e.g. via through opening 33 and of living fish during emptying of the pen e.g. via through opening 33'. This way better hygiene is achieved when pumping up living fish because these can be removed via a clean and uncontaminated removal system separately from the dead fish. To achieve this, the outlet duct is equipped with a suitable valve system inside the outlet duct 30 (not shown) to control the selective removal of dead and living fish.

Dead fish are commonly removed at regular intervals, such as once per day. Since there is normally no need for a continuous removal of sunken fish, which are collected in the center of the conical portion of the housing, the narrow opening of the funnel 24 and/or the central fish outlet duct may be closed and opened by a valve system. If arranged in the outlet duct 30, the valve system may e.g. be arranged in the top region of the channel, inside the duct or in connection with or in the through openings 33 and 33'.

Preferably, the opening of the slits/apertures 51 of the main water outlet 50 are adjustable in size in order to stop, reduce or increase the water flow out of the pen. This may be achieved by suitable closing elements arranged in connection with the slits e.g. above or under the fish grid, and which can have different positions covering parts of or the whole slit opening or leaving the slit open. In a preferred embodiment, the radially arranged closing elements can be rotated over the slits from a closed position to a fully open position or any position in between for adjustment of the main water flow out of the pen. The closing elements may also be an integrated part of the fish grid 52.

The surfaces of the outlet basin, especially of the funnel 24, the grids for fish 52 and/or the sludge mesh 42 can further comprise means for cleaning/maintenance. Preferably, the cleaning means are in form of an automated system comprising mechanical cleaning means such as brushes. They may also comprise ultrasound devices for cleaning, water nozzle(s), and/or suction elements which may be driven or rotated by driving means such as a motor over the surface of the grids/mesh to loosen waste attached to the grids/mesh.

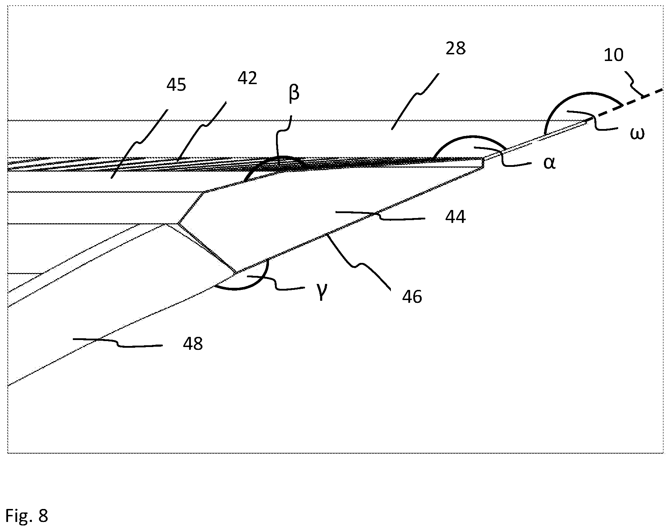

Figure 8 shows details of a particularly effective removal system 40 for sludge. The angle ω in the attachment area between the bag 10 (indicated as dashed line) and the outer edge (mounting collar 28) of the funnel 24 is preferably between 170° and 190°, and more preferably about 180° or close to 180° with a smooth surface so that turbulence is avoided in the water flow transporting the sedimented sludge towards the sludge mesh. The angle α between the mounting collar/outer edge of the funnel 24 and the outer edge of the sludge mesh 42 covering the sludge channel 44 is preferably less than 180 degrees. This way the water flow is somewhat reduced, facilitating movement of the sludge sediments down through the mesh 42 into the channel 44. Only a small amount of water will pass with the sludge into the channel 44. The angle β between the lower edge of the sludge mesh 42 and the upper wall 45 of the sludge channel 44 is preferably more than 180°, thus having a stronger decline downwards to increase the main water flow towards the narrow opening of the funnel and the main water outlet. The angel γ in the attachment area between the lower wall 46 of the channel 44 and the bottom wall of the sludge evacuation pipe 48 is preferably between 170° and 190°, and more preferably about 180 degrees to allow a non-turbulent flow through the pipe 48.

As an example, for a fish pen with a diameter of about 50 meters at the water surface and a volume of about 21 500 m³, such as a closed or semi-closed Salmon cage, a typical outlet basin according to the present invention can e.g. have a diameter of about 8 - 10 meters at the mounting collar 28 and of about 5 meters at the outer circumference of the sludge channel 44. The radial diameter of the circumferential sludge mesh 42 and sludge channel 44 can be e.g. in the range of 1-2 meters. The cylindrical portion 26 of the housing 22 may have a diameter of 1 to 1.5 meters. The sludge port 35 can have a diameter of 200 mm, while the through openings 33, 33' for release of fish are typically larger with about 400 mm in diameter. The skilled person would understand that these dimensions may differ and can be adjusted according to the intended use, desired water exchange rate, size of the pen and species to be farmed.

The water exchange from the pen is based on a two-part system, where the main water outlet is through the apertures/slits 51, while a minor portion of the water is removed via the sludge outlet system 40. In normal operation, about 1 % of the outlet water is removed via the sludge outlet system 40. The sludge outlet system 40 thereby generates a constant suction force, which allows sedimented small particulate waste to be transported with the water current along the bag walls of the pen 1 and over the sludge mesh 42. Due to this suction force, the sedimented sludge is sucked through the sludge mesh 42 into the sludge channel 44. This way, most of the sedimented sludge is removed and can be collected for further handling. It is important that the sedimented sludge flows along the bag walls over the attachment 28 between the bag and the basin and into the sludge channel 30. About 99 % of the outlet water and a small amount of sludge is transported out of the pen 1 via the main water outlet system 50. Dead fish will only be released periodically and pumped up with water by a suitable pump system such as by a Mammoth pump system (air-lifting pump) or the like.

Using Flow-simulation software (CFD), it can be shown that all water in a closed cage with an assumed volume of 21500 cubic meters, having an outlet basin according to the first embodiment of the present invention, is exchanged after a maximum of 40 minutes, indicating that the system for water exchange functions well.

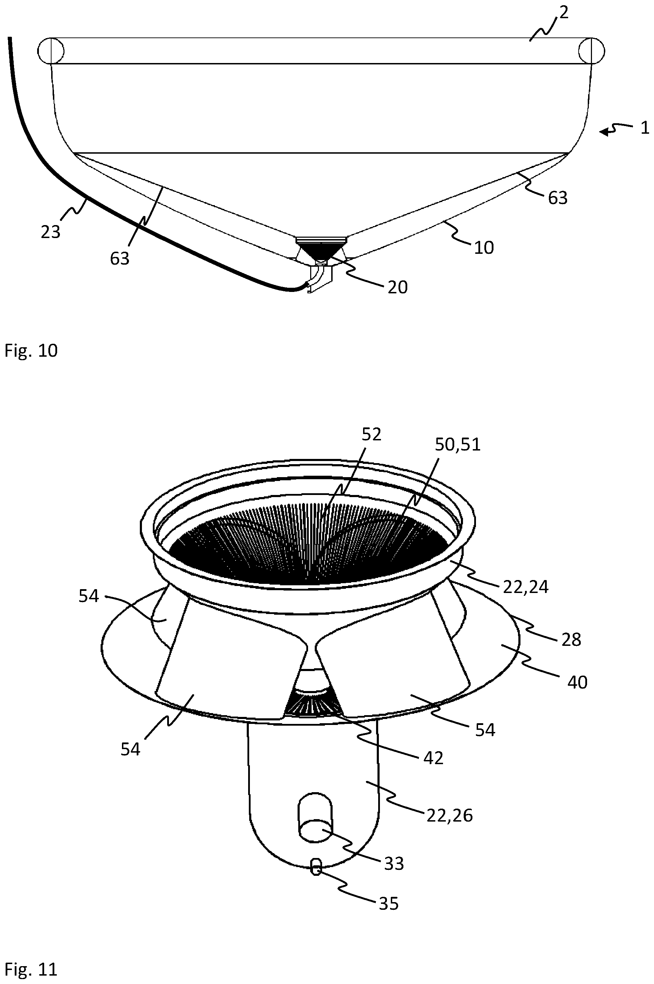

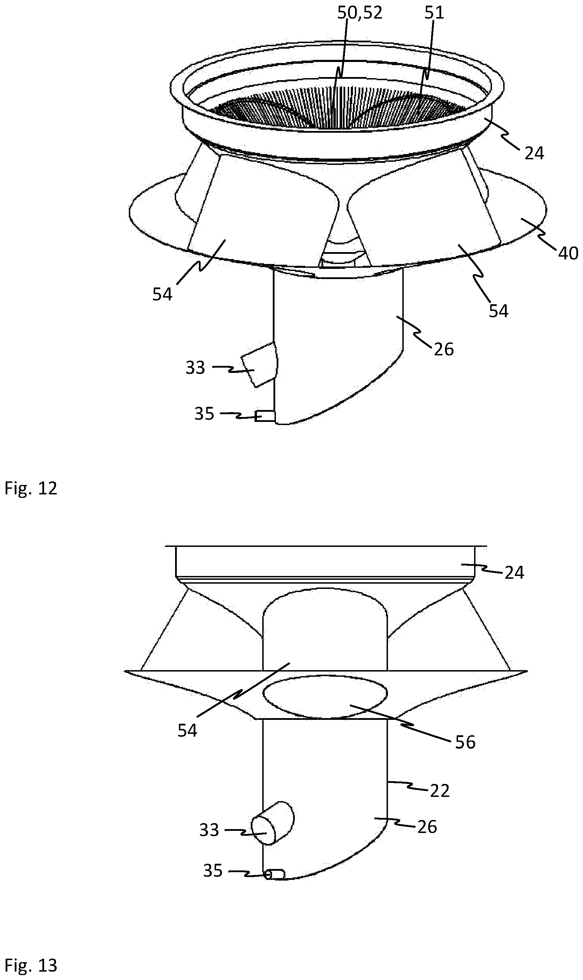

Figures 10 to 16 schematically illustrate a second embodiment of an outlet basin 20 of the present invention, where the outlet basin 20 comprises an elevated main water outlet 50.

Figure 10 shows the outlet basin of the second embodiment when mounted in a fish pen 1.
Figures 11- 16 show detailed views of the outlet basin without the pen 1. Similarly to the first embodiment described above, the basin has a housing 22 with an outer conical or frustoconical portion/funnel 24 and a central cylindrical portion 26 extending downwards. The outlet basin 20 is circumferentially attachable to the bag of the fish pen 1 along a mounting collar 28 at the periphery of the sludge removal system 40 (Fig. 11). As for the first embodiment, the lower cylindrical portion 26 is provided with a central fish outlet duct 30 inside, which in the embodiment shown is connected to opening 33 for the removal of fish (Fig. 11). As for the first embodiment, there may also be two different openings 33 and 33 allowing dead fish (morts) and living fish to be removed through separate hoses 23. As for the first embodiment, the outlet basin 20 comprises a sludge removal system 40 which is separate from the main water release system 50 and from the fish outlet system. The sludge collection and removal system 40 as well as the main water outlet 50 are arranged at the periphery of the central fish outlet duct 30.

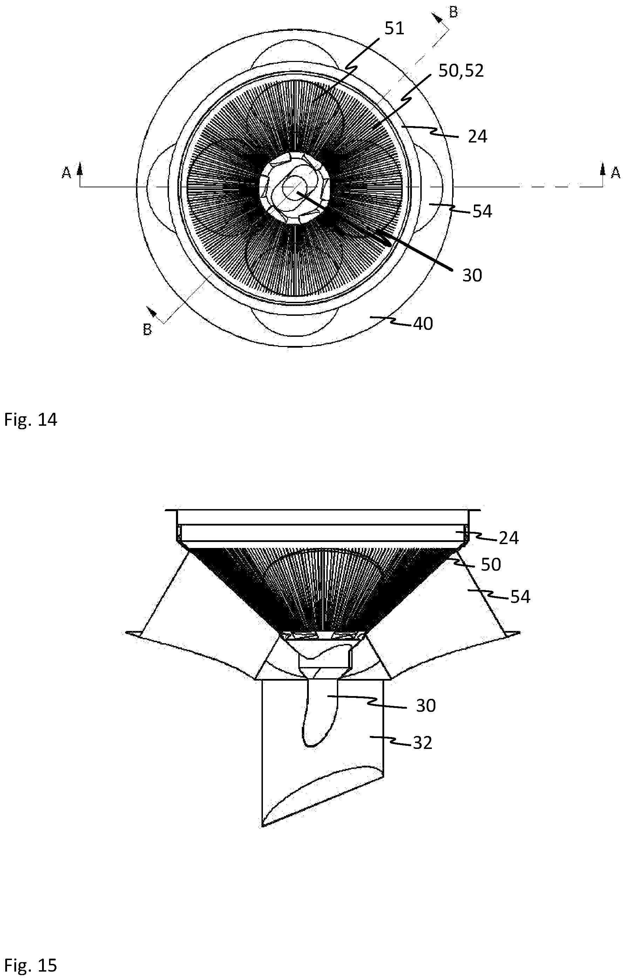

The fish outlet duct 30 inside the lower cylindrical portion 26 leaves an elongated annular space 32 between the outlet duct 30 and outer wall 31 of the cylindrical housing 26 (for details see e.g. Fig. 15) for the removal of sludge. The annular space 32 is provided with at least one sludge port 35 in the form of a further through opening (see e.g. Fig. 11-13). Both the outlet(s) for fish 33 and the sludge port 35 are typically connected to different hoses 23 for pumping up fish or sludge (not shown in the figures).

The sludge removal system 40 comprises a circumferentially arranged sludge channel 44 whereby the mounting collar 28 for attachment to the bag is arranged along the outer edge of the channel (Fig. 11). The sludge channel 44 is preferably covered by a sludge mesh 42, which is preferably slanted downwards towards the center of the basin. The sludge mesh 42 is dimensioned to allow small particulate waste to pass through the mesh 42 while the farmed organisms are retained. The sedimented sludge is transported by the water current over the sludge mesh and is sucked or guided into the sludge channel 44 which is in fluid connection with the annular space 32 of the cylindrical housing. The sludge channel 44 may therefore also be the same as or an integrated part of the annular space 32. In such a case, it is the annular space 32 which is covered by the sludge mesh 42. The sludge is thereafter transported with the water via sludge port 35 out of the outlet basin. The sludge system may comprise a conical part to collect the sludge as shown in the figures.

The inlet to the main water outlet 50 is elevated in relation to the sludge removal system 40. To achieve this, the housing comprises a funnel 24 which is elevated in relation the conical part of the sludge outlet system. The diameter of the funnel 24 is smaller in its outer diameter than the conical part of the sludge outlet system. This funnel is placed centrally above system for collection of sedimented sludge and has a narrow opening pointing downwards and ending in the outlet duct 30 for fish. The side walls of the funnel 24 are provided with at least one aperture 51, preferably a plurality of apertures 51, which function as the main water outlet 50. At least the apertures 51 in the funnel sidewalls are covered by a fish grid 52 retaining the fish in the cage. The funnel 24 optionally further comprises water pipe segments 54 each extending from the apertures of the funnel downwards through the conical part of the sludge removal system 40. The lower end 56 of the pipe(s) maybe open for direct release of the effluent water into the sea or may be connected to a recirculation system for water. The main water outlet 50 may be provided with a system to regulate the water flow, such as a suitable valve system connected to the aperture(s) 51, the pipe segments 54 and/or or the open end of the pipe segment. In operation about 99 % of the continuous effluent water leaves the cage via the main water outlet system 50, while about 1 % leaves the cage via the sludge removal system 40.

In order to guide sinking, dead fish into the funnel 24, a net 63 can be attached along the circumference of the funnel 24, wherefrom it radially extends towards the bag wall (Fig. 10) to which the net is attached.

The outlet basin for each of the embodiments can be provided with suitable sensors for monitoring of water flow and turbidity, sunken dead fish, water quality etc. These may typically include flow meters, optical sensors/cameras, chemical sensors, O2-, CO2-, N2-, NH3- sensors, sensors to monitor turbidity at sieves/meshes and outlets, temperature sensors etc. The person skilled in the art is familiar with the types of sensors used in fish farming and these will therefore not be described in more detail.

The outlet basin can be made of different materials typically used in marine constructions of this kind. Selected materials should have a high durability in water such as steel, especially acid-proof stainless steel, aluminum, glass fiber, plastic such as polyamide (PA), composite plastic etc. or combinations thereof. The outlet basin may also comprise a metal frame and/or reinforcement construction such as one or more metal pipes, combined with a lightweight plastic material such as PA.

The outlet basis can be moored by suitable mooring means to the seabed. It may also be provided with weights/solders.

The outlet basin 20 may be provided with means for lifting and lowering the basin. This is of interest for maintenance of the basin, for deployment operations involving the outlet basin 20 and pen 1 or in a case where the enclosed volume in the pen 1 needs to be reduced. To reduce the volume of the pen 1, the outlet basin 20 may be lifted, so that the volume of the bag 10 decreases if the bag is made of a flexible material and is not rigid. This can be achieved by suitable means for lifting, such as by way of ropes or chains connected to e.g. the mounting collar 28 of the basin and winches typically arranged along the floating collar or by a crane on a float or barge. The outlet basin may also be equipped with floating elements suitable for providing a positive buoyancy to the basin for lifting it up or to provide a positive or neutral buoyancy during deployment. Preferably, the floating elements can be arranged in the area of the mounting collar 28 and/or the sludge outlet channel. The floating elements may be regulatable in their buoyancy e.g. inflatable by filling with a suitable gas when a higher buoyancy is needed and provided with a valve system for release of gas. Integrated floating elements have the advantage that no additional equipment, such as chains and ropes, is needed, which represents a risk of entanglement and potential surfaces for marine fouling.

A reduction of the volume in the pen is useful when fish are to be removed from the cage by concentrating the fish in a smaller volume to facilitate the pumping operation. This may be done by pumping fish up through a suction pipe introduced into the reduced cage volume, or by evacuating the fish via a through opening 33 in the outlet basin. Furthermore, temporary reduction of the pen volume can be relevant when fish are to be treated, such as by a bath treatment in order to reduce the need for chemicals and drugs.

While the cross sections of the shown housings 22 of the outlet basin comprise circular conical parts and circular cylindrical central parts, it will obvious to the skilled person that other geometrical forms can also be used such as a cross-sectional shape selected from oval, elliptical, triangular, rectangular, pentagonal, hexagonal, orthogonal shapes etc. Correspondingly, the circumferential sludge channel may also include other perimetric shapes apart from a ring form.

The funnel may be any conical or frustoconical part with or without an elongated outlet duct at its narrow opening. Different parts of the slanting side walls of the funnels 24 may have different slanting angles from the wide opening to the narrow opening.

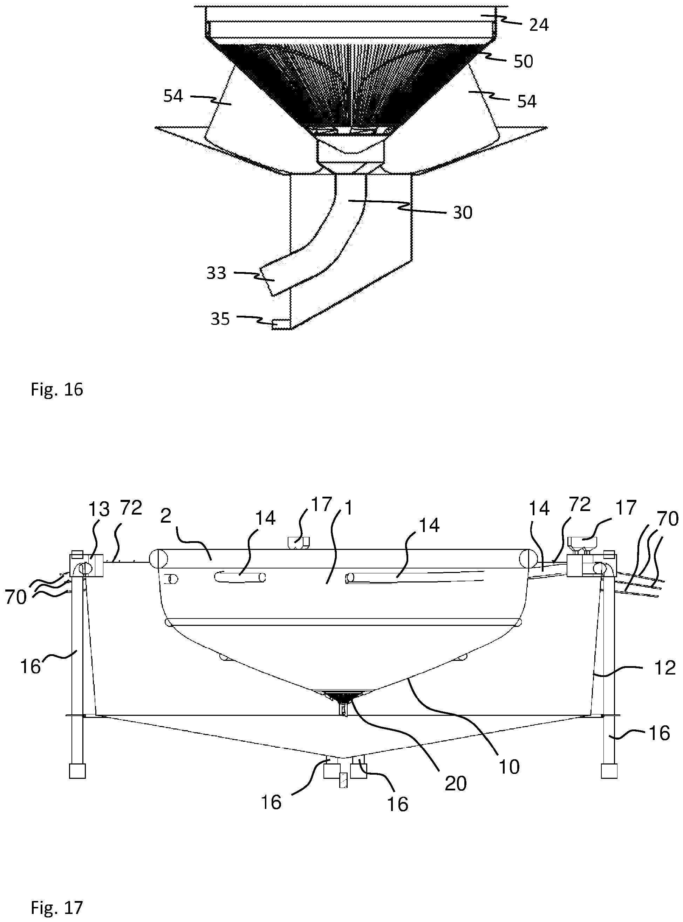

Figure 17 shows in a schematic illustration an outlet basin 20 when mounted to a closed fish pen 1 with a bag 10 (exemplified for the first embodiment of an outlet basin). The pen with the outlet basin 20 is in this case deployed inside an outer net cage 12 having a rigid floating ring 13 and surrounding the inner pen 1. The outer net cage 12 serves as an extra security measure in case of fish escaping from the inner bag 10. The pen 1 is provided with water by a plurality of water inlets 14 circumferentially arranged and distributed in the upper portion of the bag 10 receiving water from vertically extending water pipes 16. Water is typically pumped up from a lower depth so as to be substantially free of contamination by e.g. salmon lice. Additionally, the water may be filtrated or treated before it is pumped into the cage. A feeding system 17 is arranged at the outer floating ring 13, and feed maybe supplied via the water inlet system or in separate feed lines (not shown). In the embodiment of figure 17, the inner net pen is elastically moored by inner mooring means 72 to the outer floating ring of the net pen. The net pen is moored by outer mooring means 70 such as a known craw foot type mooring.

### List of references

| | |
|---|---|
| Fish pen | 1 |
| Floating collar | 2 |
| Bag | 10 |
| Net pen | 12 |
| Floating ring net pen | 13 |
| Water supply inlet | 14 |
| Water pipes | 16 |
| Feeding system | 17 |
| Outlet basin | 20 |
| Housing | 22 |
| Outlet hose | 23 |
| Funnel portion of housing | 24 |
| Cylindrical portion of housing | 26 |
| Mounting collar | 28 |
| Outlet duct for fish | 30 |
| Wall | 31 |
| Annular space | 32 |
| Through opening | 33, 33' |
| Slugde port | 35 |
| Sludge removal system | 40 |
| Sludge mesh | 42 |
| Sludge channel | 44 |
| Upper wall of sludge channel | 45 |
| Lower wall of sludge channel | 46 |
| Sludge evacuation pipes | 48 |
| Main water outlet | 50 |
| Apertures/slits | 51 |
| Fish grid | 52 |
| Water pipe segment | 54 |
| Fish guiding nett | 63 |
| Outer mooring means | 70 |
| Inner mooring means | 72 |

## Claims

1. Outlet basin (20) for a closed or semi-closed aquaculture pen (1) comprising:
a closable central outlet duct (30) for fish;
a sludge removal system (40),
wherein
- the outlet basin (20) comprises a funnel (24) with a wide upper opening and a narrow lower opening in fluid communication with the outlet duct (30) for fish,
- the sludge removal system comprises a circumferential channel (44) covered by a mesh (42) for preventing fish from passing into the channel (44) and having at least one sludge port (35) for the removal of sludge;
wherein the basin further comprises
- attachment means (28) for coupling the outlet basin (20) to the bottom portion of the pen (1) along the outer edge of the channel (44); and
- a main water outlet (50) is arranged in the funnel sidewall as one or more apertures (51) covered by a fish grid (52) to prevent fish from passing through.

2. Outlet basin (20) according to claim 1 wherein the outlet basin (20) comprises
- a two-part housing comprising the funnel (24) as an upper part and a cylindrical lower part (26) extending downwards in the area from the narrow opening of the funnel (24),
- a central region of the lower part comprises the outlet duct (30) for fish leaving an elongated annular space (32) between the outlet duct (30) and the walls (31) of the housing,
- a lower end of the outlet duct (30) is connected via one or more through openings (33) to at least one outlet hose (23) leading to a receptacle for fish
- wherein the elongated annular space (32) is in its upper end in fluid connection via one or more sludge evacuation pipes (48) with the sludge channel (44) and comprises the sludge port (35) at its lower end.

3. Outlet basin (20) according to claims 1, wherein the upper opening of the funnel (24) is elevated above the level of the circumferential channel (44) and the attachment means (28).

4. Outlet basin according to any of claims 2 and 3, wherein the circumferential sludge channel (44) is connected to the elongated annular space (32) by a plurality of radially extending sludge evacuation pipes (48), preferably curved pipes.

5. Outlet basin according to claim 2, wherein the apertures (51) of the main water outlet (50) are in the form of radial slits located between the sludge evacuation pipes (48).

6. Outlet basin according to any of the preceding claims, wherein the outlet duct (30) for fish is provided with two through openings (33, 33') for separate evacuation of dead and living fish and a valve system for closing and opening of each of the openings.

7. Outlet basin according to any of the preceding claims, wherein the effluent water flow through the main water outlet (50) is regulatable, preferably by closing means which can adjust the size of the aperture(s) (51).

8. Outlet basin according to claim 3, wherein a guiding net (63) for fish extends circumferentially upwards from the wider opening of the funnel (24) towards the side walls of the net pen (1) where it is attachable.

9. Outlet basin according to any of the preceding claims, wherein the basin comprises floating elements suitable for providing positive buoyancy to the basin.

10. Aquaculture pen (1) **characterized in that** it comprises an outlet basin (20) according to any of claims 1 to 9.

11. Use of an outlet basin according to any of claims 1 to 9 for a closed or semi-closed aquaculture pen.

12. Use of an outlet basin according to any of claims 11 for pelagic fish, preferably a species selected from salmonids, bass, bream, codfish, flatfish, tilapia, groupers.

## Patentansprüche

1. Auslassbecken (20) für einen geschlossenen oder halbgeschlossenen Aquakulturstift (1), umfassend:
einen verschließbaren zentralen Auslasskanal (30) für Fische;
ein Schlammentfernungssystem (40),
wobei
- das Auslassbecken (20) einen Trichter (24) mit einer breiten oberen Öffnung und einer schmalen unteren Öffnung in Fluidverbindung mit dem Auslasskanal (30) für Fische umfasst,
das Schlammentfernungssystem einen Umfangskanal (44) umfasst, der mit einem Netz (42) abgedeckt ist, um zu verhindern, dass Fische in den Kanal (44) gelangen, und der mindestens eine Schlammöffnung (35) zum Entfernen von Schlamm aufweist;
wobei das Becken ferner umfasst
- Befestigungsmittel (28) zum Koppeln des Auslassbeckens (20) mit dem Bodenabschnitt des Stiftes (1) entlang der Außenkante des Kanals (44); und
ein Hauptwasserauslass (50) in der Trichterseitenwand als eine oder mehrere Öffnungen (51) angeordnet ist, die von einem Fischgitter (52) abgedeckt sind, um zu verhindern, dass Fische durchlaufen.

2. Auslassbecken (20) nach Anspruch 1, wobei das Auslassbecken (20) umfasst
- ein zweiteiliges Gehäuse, das den Trichter (24) als Oberteil und ein zylindrisches Unterteil (26) umfasst, das sich im Bereich der engen Öffnung des Trichters (24) nach unten erstreckt,
- ein Mittelbereich des Unterteils den Auslasskanal (30) für die Fische umfasst, wobei zwischen dem Auslasskanal (30) und den Wänden (31) des Gehäuses ein länglicher Ringraum (32) verbleibt,
- ein unteres Ende des Auslasskanals (30) über eine oder mehrere Durchgangsöffnungen (33) mit mindestens einem Auslassschlauch (23) verbunden ist, der zu einem Fischbehälter führt,
- wobei der längliche Ringraum (32) an seinem oberen Ende über ein oder mehrere Schlammabführrohre (48) in Fluidverbindung mit dem Schlammkanal (44) steht und an seinem unteren Ende die Schlammöffnung (35) aufweist.

3. Auslassbecken (20) nach Anspruch 1, wobei die obere Öffnung des Trichters (24) über das Niveau des Umfangskanals (44) und der Befestigungsmittel (28) erhöht ist.

4. Auslassbecken nach einem der Ansprüche 2 und 3, wobei der Umfangsschlammkanal (44) mit dem länglichen Ringraum (32) durch mehrere radial verlaufende Schlammabführrohre (48), vorzugsweise gekrümmte Rohre, verbunden ist.

5. Auslassbecken nach Anspruch 2, wobei die Öffnungen (51) des Hauptwasserauslasses (50) in Form von radialen Schlitzen zwischen den Schlammabführrohren (48) angeordnet sind.

6. Auslassbecken nach einem der vorstehenden Ansprüche, wobei der Auslasskanal (30) für Fische mit zwei Durchgangsöffnungen (33, 33') zum getrennten Abführen von toten und lebenden Fischen und einem Ventilsystem zum Schließen und Öffnen jeder der Öffnungen versehen ist.

7. Auslassbecken nach einem der vorstehenden Ansprüche, wobei der Abfluss des Wassers durch den Hauptwasserauslass (50) regulierbar ist, vorzugsweise durch Verschlussmittel, die die Größe der Öffnung(en) (51) anpassen können.

8. Auslassbecken nach Anspruch 3, wobei sich ein Führungsnetz (63) für Fische von der breiteren Öffnung des Trichters (24) in Umfangsrichtung nach oben zu den Seitenwänden des Netzstifts (1) erstreckt, wo es befestigt werden kann.

9. Auslassbecken nach einem der vorhergehenden Ansprüche, wobei das Becken schwimmende Elemente umfasst, die geeignet sind, dem Becken einen positiven Auftrieb zu verleihen.

10. Aquakulturstift (1), **dadurch gekennzeichnet, dass** er ein Auslassbecken (20) gemäß einem der Ansprüche 1 bis 9 umfasst.

11. Verwendung eines Auslassbeckens gemäß einem der Ansprüche 1 bis 9 für einen geschlossenen oder halbgeschlossenen Aquakulturstift.

12. Verwendung eines Auslassbeckens gemäß einem der Ansprüche 11 für pelagische Fische, vorzugsweise eine Art, die aus Salmoniden, Barschen, Brassen, Kabeljau, Plattfischen, Tilapia und Zackenbarschen ausgewählt ist.

## Revendications

1. Bassin de sortie (20) pour un parc aquacole fermé ou semi-fermé (1) comprenant :
un conduit de sortie central pouvant être fermé (30) pour les poissons ;
un système d'élimination des boue (40),
dans lequel
- le bassin de sortie (20) comprend un entonnoir (24) avec une large ouverture supérieure et une ouverture inférieure étroite en communication fluidique avec le conduit de sortie (30) pour les poissons,
- le système d'élimination des boue comprend un canal circonférentiel (44) couvert d'une maille (42) pour empêcher les poissons de passer dans le canal (44) et présentant au moins un orifice de boue (35) pour l'élimination des boue ;
dans lequel le bassin comprend en outre
- des moyens de fixation (28) pour coupler le bassin de sortie (20) à la portion inférieure du parc (1) le long du bord extérieur du canal (44) ; et
- une sortie d'eau principale (50) est agencée dans la paroi latérale d'entonnoir sous forme d'un ou plusieurs trous (51) couverts d'une grille à poissons (52) pour empêcher le passage des poissons.

2. Bassin de sortie (20) selon la revendication 1 dans lequel le bassin de sortie (20) comprend
- un logement en deux parties comprenant l'entonnoir (24) en tant que partie supérieure et une partie inférieure cylindrique (26) s'étendant vers le bas dans la zone de l'ouverture étroite de l'entonnoir (24),
- une région centrale de la partie inférieure comprend le conduit de sortie (30) pour les poissons laissant un espace annulaire allongé (32) entre le conduit de sortie (30) et les parois (31) du logement,
- une extrémité inférieure du conduit de sortie (30) est reliée par une ou plusieurs ouvertures traversantes (33) à au moins un tuyau de sortie (23) menant à un vivier à poissons
- dans lequel l'espace annulaire allongé (32) est dans son extrémité supérieure en liaison fluidique, par l'intermédiaire d'un ou plusieurs tuyaux d'évacuation de boue (48), avec le canal de boue (44) et comprend l'orifice de boue (35) à son extrémité inférieure.

3. Bassin de sortie (20) selon la revendication 1, dans lequel l'ouverture supérieure de l'entonnoir (24) s'élève au-dessus du niveau du canal circonférentiel (44) et des moyens de fixation (28).

4. Bassin de sortie selon l'une quelconque des revendications 2 et 3, dans lequel le canal de boue circonférentiel (44) est relié à l'espace annulaire allongé (32) par une pluralité de tuyaux d'évacuation de boue s'étendant radialement (48), de préférence des tuyaux incurvés.

5. Bassin de sortie selon la revendication 2, dans lequel les trous (51) de la sortie d'eau principale (50) se présentent sous forme de fentes radiales situées entre les tuyaux d'évacuation de boue (48).

6. Bassin de sortie selon l'une quelconque des revendications précédentes, dans lequel le conduit de sortie (30) pour les poissons est doté de deux ouvertures traversantes (33, 33') pour l'évacuation séparée des poissons morts et vivants et d'un système de vanne pour la fermeture et l'ouverture de chacune des ouvertures.

7. Bassin de sortie selon l'une quelconque des revendications précédentes, dans lequel le débit d'eau effluente à travers la sortie d'eau principale (50) peut être régulé, de préférence par des moyens de fermeture qui peuvent ajuster la taille du ou des trou(s) (51).

8. Bassin de sortie selon la revendication 3, dans lequel un filet de guidage (63) pour les poissons s'étend circonférentiellement vers le haut de l'ouverture plus large de l'entonnoir (24) vers les parois latérales du parc en filet (1) où il peut être fixé.

9. Bassin de sortie selon l'une quelconque des revendications précédentes, dans lequel le bassin comprend des éléments flottants appropriés pour assurer une flottabilité positive au bassin.

10. Parc aquacole (1) **caractérisé en ce qu'**il comprend un bassin de sortie (20) selon l'une quelconque des revendications 1 à 9.

11. Utilisation d'un bassin de sortie selon l'une quelconque des revendications 1 à 9 pour un parc aquacole fermé ou semi-fermé.

12. Utilisation d'un bassin de sortie selon l'une quelconque des revendications 11 pour les poissons pélagiques, de préférence une espèce sélectionnée parmi les salmonidés, les bars, les dorades, les cabillauds, les poissons plats, les tilapias, les mérous.
